# EUROPEAN PATENT SPECIFICATION

(11) **EP 2 059 002 B1**
(45) Date of publication and mention of the grant of the patent: **22.12.2010**
(21) Application number: 08166205.8
(22) Date of filing: 09.10.2008
(51) Int. Cl.: H04L 29/06

(54) **Method and system for service processing, and SIP application server gateway module**
Verfahren und System zur Dienstverarbeitung und SIP-Anwendungsserver-Gatewaymodul
Procédé et système pour le traitement de services et module de passerelle de serveur d'application SIP

(30) Priority: 09.11.2007 CN 200710188126
(43) Date of publication of application: 13.05.2009
(73) Proprietor: Huawei Technologies Co., Ltd., Longgang District, Shenzhen Guangdong 518129 (CN)
(72) Inventor: Li, Xiaofeng c/o Huawei Technologies Co., Ltd., Shenzhen Guangdong 518129 (CN); Qiao, Xiuquan c/o Huawei Technologies Co., Ltd., Shenzhen Guangdong 518129 (CN); Ma, Li c/o Huawei Technologies Co., Ltd., Shenzhen Guangdong 518129 (CN); Shi, Xin c/o Huawei Technologies Co., Ltd., Shenzhen Guangdong 518129 (CN)
(74) Representative: Körber, Martin Hans

(56) References cited:
- EP-A- 1 633 122
- WO-A-2006/067265
- US-A1- 2006 291 486
- "Digital cellular telecommunications system (Phase 2+); Universal Mobile Telecommunications System (UMTS); Telecommunication management; Charging management; IP Multimedia Subsystem (IMS) charging (3GPP TS 32.260 version 7.4.0 Release 7); ETSI TS 132 260" ETSI STANDARDS, LIS, SOPHIA ANTIPOLIS CEDEX, FRANCE, vol. 3-SA5, no. V7.4.0, 1 October 2007 (2007-10-01), XP014040190 ISSN: 0000-0001

## Description

### Field of the Invention

The present invention relates to communication technologies, and in particular, to a method and system for IMS service processing, and SIP application server gateway module (SIP AS GW).

### Background of the Invention

The 3^{rd} Generation Partnership Project (3GPP) puts forward an IP Multimedia Subsystem (IMS) in R5 to provide voice, messaging, game and various multimedia services on a high-speed packet data network. The IMS uses the Session Initiation Protocol (SIP) as a service control protocol, and provides rich multimedia services by separating the service control from the bearer control.

The IMS service architecture includes a Serving-Call Session Control Function (S-CSCF) and various application servers. The application servers include SIP application server, Open Service Architecture (OSA) application server, and Customized Applications for Mobile Network Enhanced Logic (CAMEL) IMS Service Switching Function (IM-SSF). All of them provide IP multimedia value-added services (VASs). Various application servers are generally provided by service providers (SPs), namely, operators, and third parties. The S-CSCF communicates with the application server through a unified IMS service control (ISC) interface.

In the prior art, the service architecture that handles the IMS service generally adopts the SIP application server. The ISC interface is based on SIP. Therefore, the SIP application server may be directly connected to the S-CSCF, and reduces the signaling conversion processes. The charging of the IMS service is also based on the SIP application server. The charging architecture of the IMS network in the prior art includes an offline charging architecture and an online charging architecture. In the prior art, an interface between the SIP application server (SIP AS) and the charging system of an operator are defined, wherein the SIP AS communicates with the offline charging system through an Rf interface, and communicates with the online charging system through an Ro interface. In the process of IMS services, the SIP AS directly generates charging data records (CDRs) for various service products involved by the IMS service. The charging system of the operator performs charging according to the CDRs generated by the SIP AS.

In the process of research and practice of the prior art, the following weaknesses are found:
In the prior art, the service architecture that handles the IMS service adopts a third-party SIP AS, and the third-party SIP AS accesses the S-CSCF of the IMS core network through an ISC interface. The S-CSCF does not provide the security authentication function. Therefore, the third-party SIP AS brings security pitfalls to the IMS core network of the operator. Meanwhile, according to the charging method based on the service architecture, the third-party SIP AS directly generates CDRs while the charging system of the operator is only responsible for charging. It requires the CDRs generated by the third-party SIP AS to be correct and credible. In the current practice, however, the operator is unable to prevent malicious fraud. Therefore, the charging method involves a loophole of potential fraud and endangers the health of the VAS value chain. This can be seen in document XP014040190.

### Summary of the Invention

The problem solved by the embodiment of the present invention is providing a method and system for service processing, and SIP AS GW, thereby enabling authentication in IMS service processing.

The problem is solved through the following technical scheme:
A method for service processing provided in an embodiment of the present invention includes setting a SIP AS GW; and receiving, by the SIP AS GW, a service message from the sender, wherin the sender may be a third-party SIP AS or a SIP user Equipment, SIP UE, and judging whether it needs to interact with a VAS management platform (VASMP) according to the type of the service message; if not, directly forwarding the service message to a recipient; if yes, requesting the VASMP to respond after determining that authentication/charging is required, and determining whether to forward the service message to the recipient according to the response from the VASMP, wherein the VASMP communicates with a charging system to implement charging for third-party SIP applications.
A system for service processing provided in an embodiment of the present invention includes a SIP AS GW, adapted to receive a service message from the sender, wherin the sender may be a third-party SIP AS or a SIP UE, and judge whether it needs to interact with a VAS management platform (VASMP) according to the type of the service message; if yes, requesting the VASMP to respond after determining that authentication/charging is required, and determining whether to forward the service message to the recipient according to the response from the VASMP; and a VAS management platform (VASMP), adapted to respond as requested by the SIP AS GW, and return the response to the SIP AS GW, and communicate with a charging system to implement charging for third-party SIP applications.

A SIP AS GW provided in an embodiment of the present invention includes an IMS service control (ISC) interface, adapted to receive a service message from the sender, and send the service message to the recipient; a service authentication/charging trigger system, adapted to judge whether it needs to interact with a VAS management platform (VASMP) according to the type of the service message received by the ISC interface; if not, directly forwarding the service message to a recipient; if yes, requesting the VASMP to respond after determining that authentication/charging is required, and determining whether to forward the service message to the recipient according to the response from the VASMP; a VASMP communication interface, adapted to interaction between the service authentication/charging trigger system and the VASMP, wherein the VASMP is adapted to communicate with a charging system to implement charging for third-party SIP applications.

As seen in the foregoing technical scheme, the technical scheme provided in the embodiment of the present invention includes a SIP AS GW, and all service messages between the sender and the recipient need to be authenticated through the SIP AS GW and the VASMP jointly. It is ensured that only a third-party SIP AS that passes the authentication is able to access the IMS network. Thus, the security pitfalls and operation risks imposed by the third-party SIP AS on the Internet to the IMS core network of the operator are reduced. Moreover, the SIP AS GW and the VASMP jointly implement charging for the third-party SIP application services, which prevents the third-party SIP AS from generating CDRs directly or originating online charging requests directly and improves credibility and manageability of charging.

### Brief Description of the Drawings

Figure 1 is a first flowchart of the method for service processing according to an embodiment of the present invention;
Figure 2 is a second flowchart of the method for service processing according to an embodiment of the present invention;
Figure 3 shows a schematic illustrating the mechanism for routing a SIP message of a service request sent from a user to a third-party SIP AS;
Figure 4 shows a schematic illustrating the mechanism for routing a message of a service request sent from a third-party SIP AS to a SIP user equipment (UE);
Figure 5 is a flowchart of sending a service request from a SIP user to a third-party SIP AS;
Figure 6 is a flowchart of sending a service request from a third-party SIP AS to a SIP user;
Figure 7 shows a schematic illustrating the layered charging mode in the application/content layer, session/service control layer and the bearer layer in an IMS network proposed according to an embodiment of the present invention;
Figure 8 shows a schematic illustrating the architecture of a system for service processing according toaccording to an embodiment of the present invention; and
Figure 9 shows a schematic illustrating the architecture of a SIP AS GW according to an embodiment of the present invention.

### Detailed Description of the Invention

A method for service processing provided in an embodiment of the present invention enables authentication in IMS service processing and ensures the credibility of charging during IMS service processing.

Before the description of the method for service processing, a SIP application server gateway module (SIP AS GW) provided in an embodiment of the present invention is briefly described.

A SIP AS GW provided in an embodiment of the present invention is adapted to support a third-party SIP application server (SIP AS) in secure access and content charging in an IMS network. The SIP AS GW at least includes an ISC communication interface, a service authentication/charging trigger system, and a VASMP communication interface.

The ISC communication interface is adapted to be responsible for communication between the SIP AS GW and a third-party SIP AS, and for SIP messages interaction between a SIP AS GW and a Serving-Call Session Control Function (S-CSCF). The ISC communication interface communicates with the third-party SIP AS and the S-CSCF according to the IMS Service Control (ISC) interface protocol defined in the 3GPP IMS specifications 23.228.

The service authentication/charging trigger system is adapted to analyze a SIP message received from the ISC communication interface, and judge whether a service authentication/charging is required. If the service authentication/charging is required, the service authentication/charging trigger system maps the relevant fields in the SIP message received from the ISC communication interface to the fields in the service authentication/charging message employing the VASMP communication interface. Through the VASMP communication interface, the service authentication/charging trigger system sends the message to the VASMP for service authentication and charging. If service authentication/charging is not required, the service authentication/charging trigger system forwards the SIP message to the destination address of the SIP message through the ISC communication interface.

The VASMP communication interface communicates with the VASMP through a link, and communicates with the VASMP through a specific protocol. The specific protocol depends on the specific interface protocol provided by the VASMP of a specific operator. The VASMP communication interface implements service authentication, user authentication and service/content charging.

The VASMP mentioned above is adapted to communicate with the charging system of the operator to implement charging for third-party SIP applications. The VASMP communicates with the offline charging system (OFCS) through a link and communicates with the OFCS through a specific protocol (for example, Rf interface, File Transfer Protocol (FTP)), transmits charging data records (CDRs), and implements the offline charging function. The VASMP communicates with the online charging system (OCS) and communicates with the OCS through a specific protocol (for example, Ro interface protocol), deducts the service charges in real time or reserves resources, and implements the real-time online charging function.

The method for service processing provided according to an embodiment of the present invention is described below in detail.

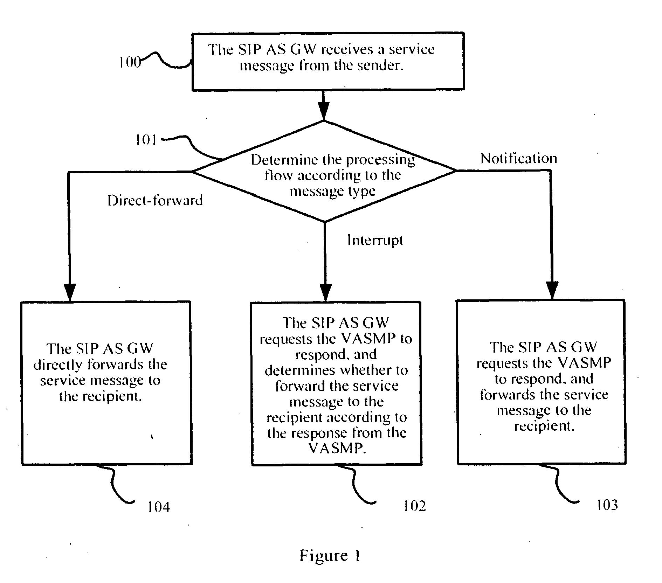

As shown in Figure 1, a first flowchart of a method for service processing in an embodiment of the present invention includes the following steps:
Step 100: The SIP AS GW receives a service message from a sender.
Step 101: According to the type of the service message, the SIP AS GW judges whether it is necessary to interact with the VASMP, and judges whether service authentication/charging or charging is required.
   If the service message is an interrupt message, it is necessary to interact with the VASMP and perform service authentication/charging, and the process proceeds to step 102; if the service message is a notification message, it is necessary to interact with the VASMP and perform charging, and the process proceeds to step 103; if the service message is a direct-forward message, it is unnecessary to interact with the VASMP, and the process proceeds to step 104.
Step 102: The SIP AS GW requests the VASMP to respond, and determines whether to forward the service message to the recipient according to the response from the VASMP.
Step 103: The SIP AS GW requests the VASMP to respond, and forwards the service message to the recipient.
Step 104: The SIP AS GW directly forwards the service message to the recipient.

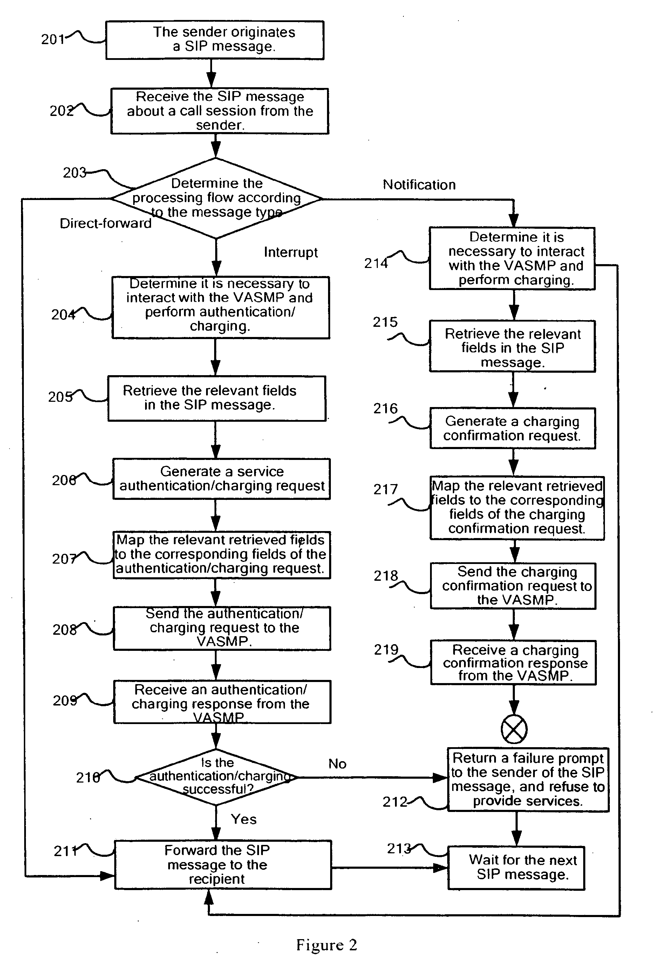

Figure 2 shows a second flowchart of a method for service processing according to an embodiment of the present invention, wherein a SIP AS GW is adapted to support a third-party SIP AS in secure access and content charging. The second flowchart includes the following steps:
Step 201: The sender originates a SIP message.
   The "sender" here may be a third-party AS or a SIP UE.
Step 202: The SIP AS GW receives a SIP message about a call session from the sender through the ISC communication interface.
   The call session may be established previously, or initiated by the message. The message complies with the ISC communication interface protocol.
Step 203: According to the type of the SIP message received from the ISC communication interface, the service authentication/charging trigger system judges whether it is necessary to interact with the VASMP, and judges whether service authentication/charging or charging is required, thus determining the processing flow of the message.
   If the message is an interrupt message, the process proceeds to step 204; if the message is a notification message, the process proceeds to step 214; if the message is a direct-forward message, it is unnecessary to interact with the VASMP and the process proceeds to step 211.
Step 204: If the received message is an interrupt message, it is necessary to interact with the VASMP and perform service authentication/charging, and the process proceeds to step 205.
Step 205: interrupting the IMS session processing, that is, it suspending forwarding the SIP message temporarily, and retrieving the relevant fields in the SIP message.
   Relevant fields include: the "To" field of the SP address in the service message or the "service type" field in the service message, the "From" field and the "To" field in the service message.
Step 206: The service authentication/charging trigger system generates a service authentication/charging request message to be sent to the VASMP.
Step 207: The service authentication/charging trigger system maps the relevant fields retrieved from the SIP message received through the ISC communication interface to the corresponding fields in the service authentication/charging request message.
   For example, mappings from the "To" field of the SP address of the service message or the "service type" field of the service message to a service ID field; from the "From" or "To" field in the service message to an ID field of the service user; from the "From" or "To" field in the service message to an ID field of the user who pays for the service (hereinafter referred to as "the payer").
Step 208: Through the VASMP communication interface, the service authentication/charging trigger system sends the service authentication/charging request message to the VASMP.
Step 209: Through the VASMP communication interface, the service authentication/charging trigger system receives a service authentication/charging response from the VASMP.
Step 210: The service authentication/charging trigger system judges whether the authentication and charging succeed according to the response.
   If the service authentication/charging succeed, the process proceeds to step 211; if the service authentication/charging fails, the process proceeds to step 212.
Step 211: If the service authentication/charging succeed, the service authentication/charging trigger system routes the received SIP message through the ISC communication interface according to the destination address in the SIP message, and forwards the SIP message to the recipient.
Step 212: If the service authentication or charging fails, the SIP AS GW returns a failure prompt to the sender of the SIP message, refuses to provide further services, and the process proceeds to step 213.
Step 213: The SIP AS GW waits for the next SIP message from the sender.
Step 214: If the message received is a notification message, it is necessary to interact with the VASMP and perform service charging, and the SIP AS GW dose not interrupt the IMS session, and it is determined to forward the SIP message, proceed to step 211, and, meanwhile proceed to step 215.
Step 215: The service authentication/charging trigger system handles the SIP message received from the ISC communication interface, and retrieves the relevant fields of the message.
   The relevant fields include: the "To" field of the SP address in the service message or the "service type" field in the service message, the "From" field and the "To" field in the service message.
Step 216: The service authentication/charging trigger system generates a service charging confirmation request to be sent to the VASMP.
Step 217: The service authentication/charging trigger system maps the relevant fields retrieved from the SIP message received from the ISC communication interface to the corresponding fields in the service charging confirmation request.
   For example, mappings from the "To" field of the SP address in the service message or the "service type" field in the service message to a service ID field; from the "From" or "To" field in the service message to an ID field of the service user; from the "From" or "To" field in the service message to an ID field of the payer.
Step 218: Through the VASMP communication interface, the service authentication/charging trigger system sends the service charging confirmation request to the VASMP.
Step 219: Through the VASMP communication interface, the service authentication/charging trigger system receives a service charging confirmation response from the VASMP, and the service charging confirmation process is complete.

A SIP AS GW is employed by the method for service processing in the embodiment of the present invention. Accordingly, there are some changes in the mechanism for routing SIP messages between a third-party SIP AS and an S-CSCF. The changes to a SIP message before and after passing through the SIP AS GW are described below.

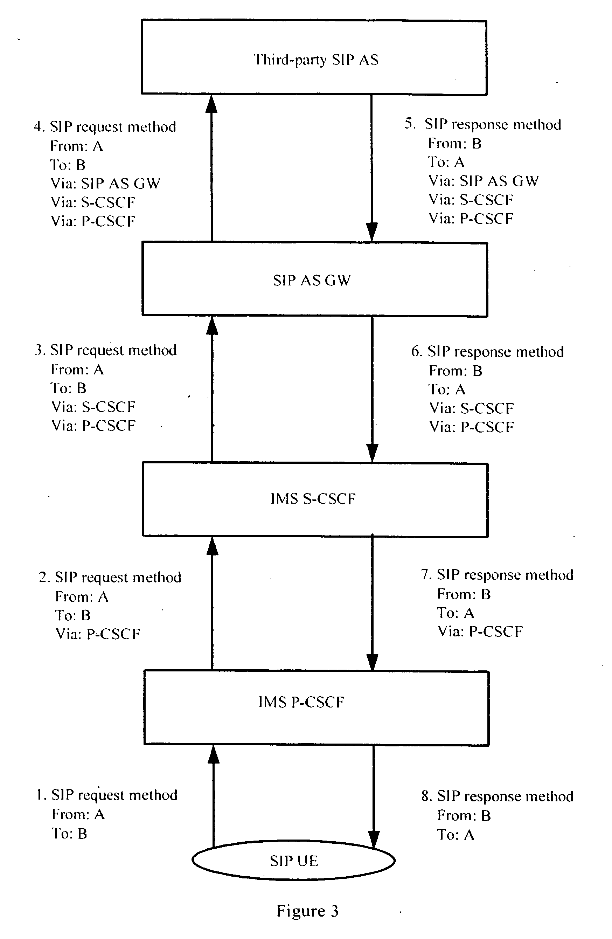

Figure 3 shows the mechanism for routing a SIP message of a service request sent from a user to a third-party SIP AS.

As shown in Figure 3, a SIP message of a service request is sent from a user to a third-party SIP AS, wherein "A" means a SIP UE, and "B" means a third-party SIP AS. When the SIP message is sent from the SIP UE to an IMS Proxy Call Session Control Function (P-CSCF), the P-CSCF adds its own address to the "via" field of the SIP message. The P-CSCF sends the SIP message to an IMS Serving-Call Session Control Function (S-CSCF). According to the service triggering rules, the S-CSCF determines the address of the SIP AS GW accessed by the third-party SIP AS that provides this service. The S-CSCF adds its own address to the "via" field before the "via" field of the P-CSCF address. Then the S-CSCF sends the SIP message to the SIP AS GW. The SIP AS GW determines the processing flow according to the message type. Upon completion of processing, the SIP AS GW adds its own address to the "via" field before the "via" field of the S-CSCF address. The SIP AS GW sends the SIP message to the third-party SIP AS. When the SIP message is sent to the third-party SIP AS, the title of the SIP message includes at least three "via" fields. Therefore, a message route composed of "via" fields is developed: P-CSCF->S-CSCF->SIP AS GW.

The third-party SIP AS starts the corresponding service logics, and responds to the SIP message. At this time, "A" still means the SIP UE, and "B" still means the third-party SIP AS. When the SIP response is returned from the third-party SIP AS to the SIP AS GW, the SIP AS GW executes the function required by the SIP response and clears the topmost address in the "via" field, namely, the SIP AS GW address. The SIP AS GW sends the SIP response to the next address in the "via" field, namely, the S-CSCF address. The S-CSCF executes the function required by the SIP response, and clears the topmost address in the "via" field, namely, its own address. The S-CSCF sends the SIP response to the next address in the "via" field, namely, the P-CSCF address. Upon receiving the response, the P-CSCF executes the function required by the SIP response, and clears the remaining address in the "via" field, namely, the P-CSCF address. The P-CSCF sends the SIP response to the SIP UE.

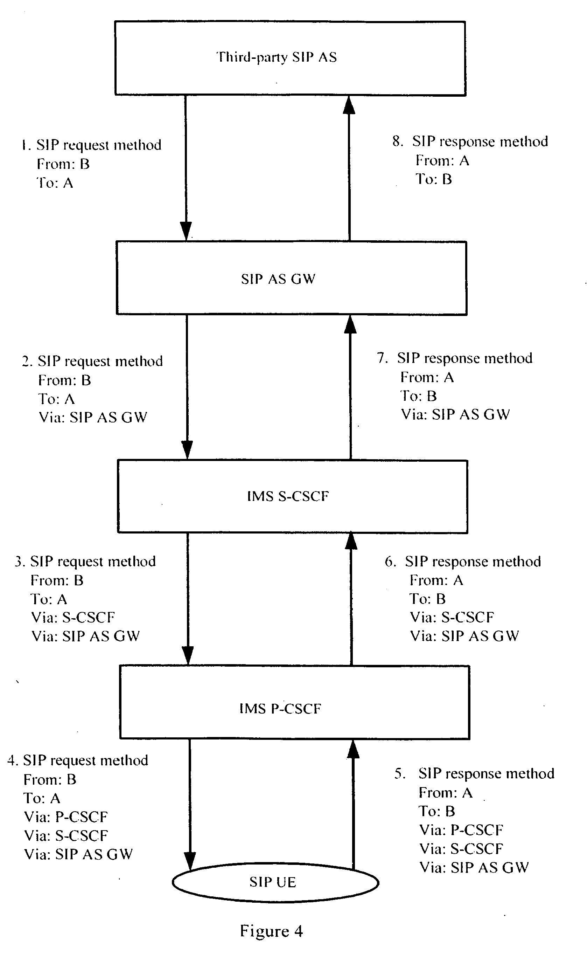

Figure 4 shows the mechanism for routing a message of a service request sent from a third-party SIP AS to a SIP UE.

As shown in Figure 4, a SIP message of a service request from a third-party SIP AS is routed to a SIP UE, wherein "A" means a third-party SIP AS, and "B" means a SIP UE. When a SIP message is sent from the third-party SIP AS to a SIP AS GW, the SIP AS GW executes the function required by the SIP message, and then adds its address to the "via" field in the SIP message. The SIP AS GW sends the SIP message to an IMS S-CSCF. The S-CSCF executes the function required by the SIP message and adds its own address to the "via" field before the "via" field of the SIP AS GW address. The S-CSCF sends the SIP message to an IMS P-CSCF. The P-CSCF executes the function required by the SIP message, and adds its own address to the "via" field before the "via" field of the S-CSCF address. The P-CSCF sends the SIP message to the SIP UE. When the SIP message is sent to the SIP UE, the title of the SIP message includes at least three "via" fields. Therefore, a message route composed of "via" fields is developed: SIP AS GW->S-CSCF->P-CSCF.

The SIP UE responds to the SIP message, and returns the SIP response to the P-CSCF according to the topmost address in the "via" field, namely, the P-CSCF address. Upon receiving the SIP response, the P-CSCF executes the function required by the SIP response, and clears the topmost address in the "via" field, namely, the P-CSCF address. The P-CSCF sends the SIP response to the next address in the "via" field, namely, the S-CSCF address. The S-CSCF executes the function required by the SIP response, and clears the topmost address in the "via" field, namely, the S-CSCF address. The S-CSCF sends the SIP response to the next address in the "via" field, namely, the SIP AS GW address. Upon receiving the SIP response, the SIP AS GW executes the function required by the SIP response, and clears the remaining address in the "via" field, namely, the SIP AS GW address. The SIP AS GW sends the SIP response to the third-party SIP AS. When the SIP response is returned from the SIP AS GW to the third-party SIP AS, the SIP AS GW executes the corresponding service logics.

The foregoing method for service processing in an embodiment of the present invention is described below with reference to specific scenarios, including two scenarios: sending a service request from a SIP user to a third-party SIP service provider, and sending a service request from a third-party SIP service provider to a SIP user.

In scenario 1, the service request of a SIP user needs to be sent to a VASMP through a SIP AS GW so that the SIP user is unable to use the VAS of the third-party SIP service provider if the SIP user is in arrears. The service request can be sent to the third-party SIP service provider only after being authenticated by the VASMP. The authentication includes check of the user status and check of the service subscription relation.

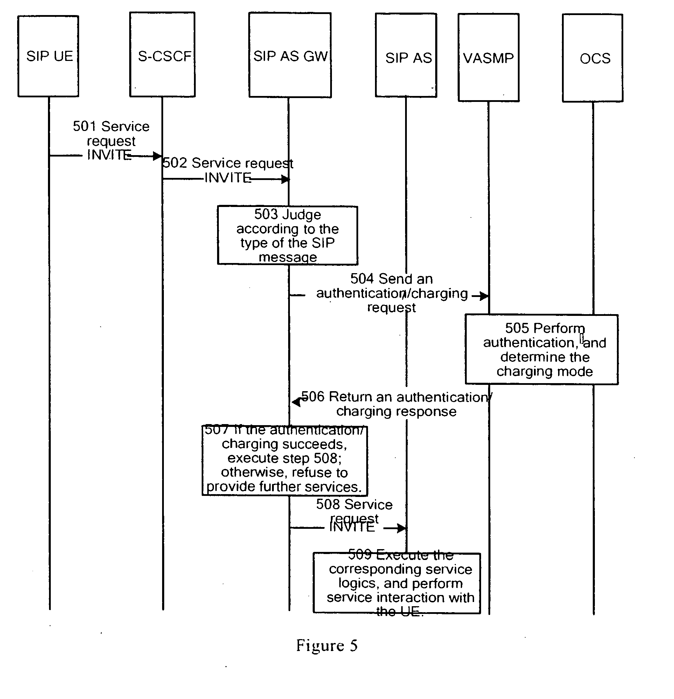

As shown in Figure 5, the flowchart of sending a service request from a SIP user to a third-party SIP AS includes the following steps:
Steps 501-502: The S-CSCF receives a SIP message and sends the SIP message to the SIP AS GW.
   The home S-CSCF of the SIP UE receives the SIP message submitted by the UE (for example, INVITE, and MESSAGE), and checks whether the SIP message meets the triggering conditions set by the SIP AS according to the service triggering conditions (as regards whether the service is a third-party SIP service); if so, the SIP message that originates the service request will be routed to the home/visited SIP AS GW accessed by the SIP service provider according to the address of the SIP AS.
Step 503: The home/visited SIP AS GW analyzes the received SIP message, and judges whether it needs to interact with the VASMP, and whether service authentication or charging is required.
   The judging rules are: If the service message is a direct-forward message (for example, 200 OK message, and ACK message), it does not need to interact with the VASMP, and the SIP AS GW does not need to perform any operation, but forwards the message according to the destination address of the SIP message. If the service message is an interrupt or notification message, it needs to interact with the VASMP.
   Moreover, if the service message is an interrupt message, for example, the SIP message that originates a service request (for example, INVITE, and MESSAGE), or the SIP message that changes the session media type during a session (for example, RE-INVITE, and UPDATE), it needs to notify the VASMP to perform authentication/charging.
   If the service message is a notification message, for example, the SIP message whose service process is complete (for example, BYE), it needs to notify the VASMP to confirm charging.
   In this step, the SIP message is INVITE, and the home/visited SIP AS GW determines that it needs to interact with the VASMP and perform authentication/charging.
Step 504: After determining it needs to perform service authentication/charging, the SIP AS GW sends an authentication/charging request to the VASMP accessed by the SIP AS GW.
   The SIP AS GW generates an authentication/charging request, which carries a service ID, a service user ID, or a payer ID. The service ID, the service user ID, and the payer ID are results of mapping from the parameters in the SIP message.
   The detailed mapping process is as follows:
   By analyzing the SIP message, the SIP AS GW obtains the service-related use information required for service authentication/charging, such as the service ID, payer ID or service user ID.
      (1) For the service ID, the SIP message has no specific field for identifying the service in the current practice, which makes it difficult to differentiate between service types. Therefore, multiple specific implementation modes are applicable.
         One mode is: The fields in the SIP message or the contents in the message body or a combination thereof are mapped to a specific service ID. This mode is similar to the current practice in the short message VAS, where the operator plans the SIP addresses of third-party SIP service providers uniformly. The SIP address of a third-party SIP service provider identifies the service type. In this way, the SIP AS GW can obtain the service ID through the "To" field in the SIP address of a service provider in the SIP message, and map it to a "service ID" field of the service authentication/charging request.
         Another mode is to extend the SIP protocol by extending the ISC communication interface protocol, namely, by adding the "service type" field. In this way, after receiving a SIP message with a "service type" field, the SIP AS GW maps the "service type" field to the corresponding "service ID" field in the service authentication/charging request.
      (2) For the service user ID, the SIP AS GW maps the "From" or "To" field in the SIP message that triggers service authentication/charging to the "service user ID" required by the service authentication/charging request. Generally, mapping from the "From" field to the service user ID means: In the event that the SIP user originates a SIP message, if the SIP message is originated from a third-party AS, the "To" field is mapped to the service user ID.
      (3) The payer ID is generally to the service that charges the calling party. The SIP AS GW maps the "From" field of the SIP message that triggers service authentication/charging to the "payer ID" required by the service authentication/charging request. For the service that charges the called party, the SIP AS GW maps the "To" field in the SIP message that triggers service authentication/charging to the "payer ID" required by the service authentication/charging request; if the SIP AS GW is unsure of the paying party, this field may be left blank, and the VASMP will determine the payer ID.
Step 505: The VASMP performs authentication and determines the charging mode.
   After receiving the authentication/charging request, the VASM performs authentication according to the service user ID, payer ID, or service ID; judges whether the user has subscribed to the service and whether the user status is normal; determines the charging mode of the payer: for a prepaid user, the VASMP performs online charging credit control together with the online charging system; for a postpaid user, the VASMP outputs a bill directly, and sends it to the offline charging system for charging.
Step 506: The VASMP returns an authentication/charging response.
   The VASMP returns an authentication/charging response to the home/visited SIP AS GW. The response includes a result code field, indicating whether the authentication/charging succeeds.
   Step 507: After receiving the authentication/charging response, the home/visited SIP AS GW performs step 508 if the response indicates successful authentication/charging; otherwise, the home/visited SIP AS GW refuses to provide further services.
Step 508: The home/visited SIP AS GW sends the SIP message that originates a service request to the third-party SIP AS.
Step 509: After receiving the forwarded SIP message, the third-party SIP AS executes the corresponding service logics, and performs service-related SIP message interaction through the SIP AS GW and the SIP UE.

It should be noted that after the foregoing process is finished, if the SIP AS GW receives a message that changes the session content, for example, REINVITE or UPDATE, sent from any party, it may be necessary to interrupt the message forwarding, and send the authentication/charging request to the VASMP accessed by the SIP AS GW again, asking for authentication and rating. If the VASMP gives a success response, the SIP AS GW forwards the message to the destination address; if the VASMP gives a failure response, the SIP AS GW refuses to provide further services. In a SIP session process, the SIP UE or the third-party SIP AS may originate a message for changing the session type (from voice to multimedia). In this case, the need for interrupting the message forwarding according to the REINVITE or UPDATE message is related to the specific service charging mode, and depends on the charging configuration required by the operator or the SP for this service. If the change of session content or type is chargeable, the charging trigger point is set beforehand on the SIP AS GW. When such message is received, an interruption is triggered.

When the SIP AS GW receives a message indicative of completion of the service process sent by the SIP UE (for example, BYE message), and determines that the received message indicates completion of the service process, the SIP AS GW forwards the BYE message to the destination address, and sends a charging confirmation request to the VASMP accessed by the SIP AS GW. The VASMP returns an authentication/charging confirmation response. The process of generating an authentication confirmation request here is basically the same as the process of generating an authentication/charging request. This charging confirmation request contains a service ID, a service user ID or a payer ID. The service ID, the service user ID and the payer ID are results of mapping from the parameters in the SIP message.

In scenario 2, the service request sent from a third-party SIP service provider to a SIP user must be sent to a VASMP through a SIP AS GW and authenticated by the VASMP before being sent to the SIP user. This authentication includes authentication of the service subscription relation, which is generated in the system after being confirmed by the SIP user. The purposes are to manage the value-added applications pushed by the third-party SIP service provider more conveniently, to implement clear charging, and to prevent the third-party SIP service provider from pushing SIP value-added applications to any SIP user arbitrarily. Therefore, the mechanism prevents the third-party SIP service provider from pushing SIP applications to any SIP user arbitrarily and charging the SIP user without awareness of the SIP user.

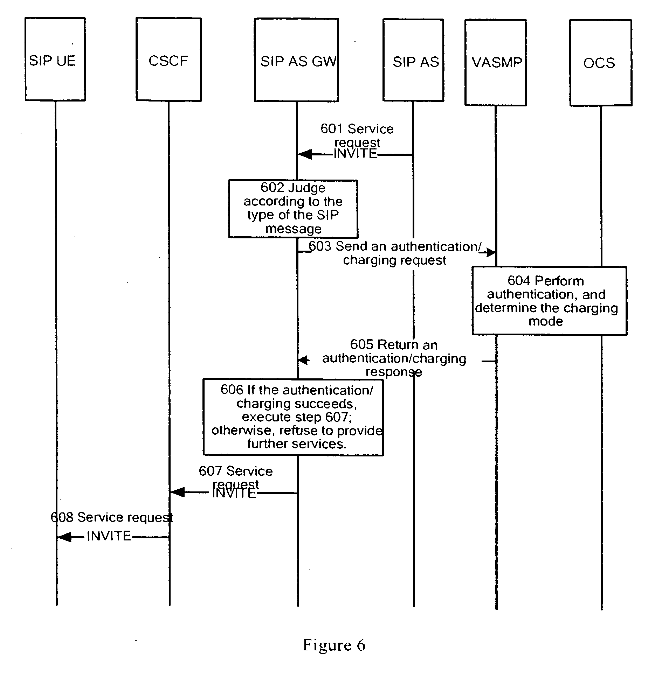

As shown in Figure 6, the flowchart of sending a service request from a third-party SIP AS to a SIP user includes the following steps:
Step 601: The third-party SIP AS sends the SIP message that originates a service request (for example, INVITE, and MESSAGE) to the home/visited SIP AS GW accessed by the SIP application provider.
Step 602: The home/visited SIP AS GW analyzes the received SIP message, and judges whether it needs to interact with the VASMP, and whether service authentication or charging is required.
   The judging rules are: If the service message is a direct-forward message (for example, 200 OK message, and ACK message), it does not need to interact with the VASMP, and the SIP AS GW does not need to perform any operation, but forwards the message according to the destination address of the SIP message.
   If the service message is an interrupt or notification message, it needs to interact with the VASMP.
   Moreover, if the service message is an interrupt message, for example, the SIP message that originates a service request (for example, INVITE, and MESSAGE), or the SIP message that changes the session media type during a session (for example, RE-INVITE, and UPDATE), it needs to notify the VASMP to perform authentication/charging. This type of message interrupts the IMS session, and subsequent IMS session processing is performed according to the authentication/charging result.
   If the service message is a notification message, for example, the SIP message whose service process is complete (for example, BYE), it needs to notify the VASMP to confirm charging. This type of message does not interrupt the IMS session.
   In this step, the SIP message is INVITE, and the home/visited SIP AS GW determines that it needs to interact with the VASMP and perform authentication/charging.
Step 603: After determining it needs to perform service authentication/charging, the SIP AS GW sends an authentication/charging request to the VASMP accessed by the SIP AS GW.
   The SIP AS GW generates an authentication/charging request, which carries a service ID, a service user ID, or a payer ID. The service ID, the service user ID, and the payer ID three IDs are results of mapping from the parameters in the SIP message.

The detailed mapping process is as follows:
By analyzing the SIP message, the SIP AS GW obtains the service-related use information required for service authentication/charging, such as the service ID, payer ID or service user ID.
   (1) For the service ID, the SIP message has no specific field for identifying the service in the current practice, which makes it difficult to differentiate between service types. Therefore, multiple implementation modes are applicable.
      One mode is: The fields in the SIP message or the contents in the message body or a combination thereof are mapped to a service ID. This mode is similar to the current practice in the short message VAS, where the operator plans the SIP addresses of third-party SIP service providers uniformly. The SIP address of a third-party SIP service provider identifies the service type. In this way, the SIP AS GW can obtain the service ID through the "To" field in the SIP address of a service provider in the SIP message, and map it to a "service ID" field of the service authentication/charging request.
      Another mode is to extend the SIP protocol by extending the ISC communication interface protocol, namely, by adding the "service type" field. In this way, after receiving a SIP message with a "service type" field, the SIP AS GW maps the "service type" field to the relevant "service ID" field in the service authentication/charging request.
   (2) For the service user ID, the SIP AS GW maps the "From" or "To" field in the SIP message that triggers service authentication/charging to the "service user ID" required by the service authentication/charging request. Generally, mapping from the "From" field to the service user ID means: In the event that the SIP user originates a SIP message, if the SIP message is originated from a third-party AS, the "To" field is mapped to the service user ID.
   (3) The payer ID is generally specific to the service that charges the calling party. The SIP AS GW maps the "From" field of the SIP message that triggers service authentication/charging to the "payer ID" required by the service authentication/charging request. For the service that charges the called party, the SIP AS GW maps the "To" field in the SIP message that triggers service authentication/charging to the "payer ID" required by the service authentication/charging request; if the SIP AS GW is unsure of the paying party, this field may be left blank, and the VASMP will determine the payer ID.
Step 604: The VASMP performs authentication and determines the charging mode.
   After receiving the authentication/charging request, the VASM performs authentication according to the service user ID, payer ID, or service ID; judges whether the user has subscribed to the service and whether the user status is normal; determines the charging mode of the payer: for a prepaid user, the VASMP performs online charging credit control together with the online charging system; for a postpaid user, the VASMP outputs a bill directly, and sends it to the offline charging system for charging.
Step 605: The VASMP returns an authentication/charging response.
   The VASMP returns an authentication/charging response to the home/visited SIP AS GW. The response includes a result code field, indicating whether the authentication/charging succeeds.
Step 606: After receiving the authentication/charging response, the home/visited SIP AS GW performs step 607 if the response indicates successful authentication/charging; otherwise, it refuses to provide further services.
Steps 607-608: The home/visited SIP AS GW sends the SIP message that originates a service request to the SIP UE through the home S-CSCF. The SIP UE performs service-related SIP message interaction through the SIP AS GW and the third-party SIP AS.

It should be noted that after the foregoing process is finished, if the SIP AS GW receives a message that changes the session content, for example, REINVITE or UPDATE, sent from any party, it may be necessary to interrupt the message forwarding, and send the authentication/charging request to the VASMP accessed by the SIP AS GW again, asking for authentication and rating. If the VASMP gives a success response, the SIP AS GW forwards the message to the destination address; if the VASMP gives a failure response, the SIP AS GW refuses to provide further services.

When the SIP AS GW receives a message indicative of completion of the service process sent by the third-party SIP AS (for example, BYE message), and determines that the received message indicates completion of the service process, the SIP AS GW forwards the BYE message to the destination address, and sends a charging confirmation request to the VASMP accessed by the SIP AS GW. The VASMP returns an authentication/charging confirmation response. The process of generating an authentication confirmation request here is basically the same as the process of generating an authentication/charging request. This charging confirmation request contains a service ID, a service user ID and a payer ID. The three IDs are results of mapping from the parameters in the SIP message.

By advantages of a SIP AS GW added in the embodiment of the present invention, the charging mode is improved, and the IMS network supports the layered charging modes, namely, application/content layer, session/service control layer, and bearer layer.

In the prior art, the charging is not specific to a layer, but is performed on the whole. With a SIP AS GW added in the embodiment of the present invention, a layered charging method is proposed. Generally, charging is triggered by use of a service. In an IMS network, a third-party SIP AS provides services which involve both the service provider (SP) and the content provider (CP) in the application/content layer; involve the network elements (NEs) related to session control provided by the IMS network in the session/service control layer; and involve the bearer network resources of the packet-switched domain in the bearer network layer. Therefore, a layered charging model is proposed in an embodiment of the present invention. This model performs charging specific to the application/content layer, the session/service control layer and the bearer network layer. In this way, the operator may adopt different charging policies in each specific charging layer according to different marketing policies, hence supporting flexible charging modes.

The bearer network layer and the session/service control layer primarily embody the capabilities of providing basic services on the network (including bearer network and service network), and involve relatively less content information. Therefore, the operator generally applies the charging modes and policies based on resource usage, and some typical charging modes based on time, traffic, monthly fee and grading. In the application/content layer, the factors that need to be considered include the traditional metering modes such as duration and traffic, and more importantly, the factors influential to the value of a content information product, for example, timeliness, and popularity index, thus reflecting the value difference between content products and realizing the value-based content charging.

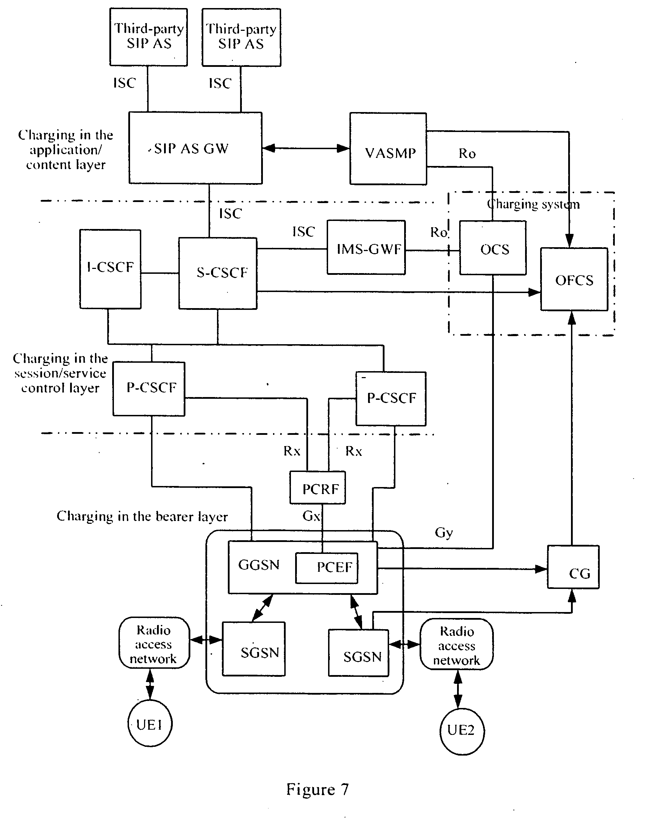

Figure 7 shows the layered charging mode in the application/content layer, session/service control layer and the bearer layer in an IMS network supported in an embodiment of the present invention.
(1) In the application/content layer, the SIP AS GW and the VASMP work together to perform content charging for the SIP value-added services (VASs) provided by the third-party SIP AS.
   The SIP AS GW triggers the content charging. The VASMP performs service authentication, user authentication and check of service subscription relation, and performs service rating through interaction with the charging system. The VASMP judges the type of the service user. If the user is a prepaid user, the VASMP communicates with the Online Charging System (OCS); if the user is a postpaid user, the VASMP communicates with the Offline Charging System (OFCS).
(2) The session/service control layer includes various NEs of the IMS subsystem, for example, Serving-Call Session Control Function (S-CSCF), Interrogating-Call Session Control Function (I-CSCF), Proxy-Call Session Control Function (P-CSCF), and IMS-GateWay Function (IMS-GWF), which are responsible for managing IMS sessions and IMS users.
   The S-CSCF is responsible for IMS session control. The S-CSCF communicates with the OCS through the IMS-GWF and implements real-time charging in the session/service control layer; the S-CSCF communicates with the OFCS and implements offline charging in the session/service control layer.
(3) The bearer network layer includes a radio access network and a packet-switched core network. The packet-switched core network includes a Serving GPRS Support Node (SGSN) and a GPRS Gateway Support Node (GGSN). The SGSN and the GGSN are connected to the OFCS through a Charging Gateway (CG), and the GGSN is directly connected to the OCS to perform real-time online charging in the packet-switched domain. In the 3GPP R7 specifications, a policy and charging control part is added, which includes a Policy & Charging Rule Function (PCRF) and a Policy & Charging Execution Function (PCEF), thus supporting the session layer of the IMS network. According to the result of the SIP session negotiation, the P-CSCF dynamically configures the quality of service (QoS) of the lower-layer bearer network and the corresponding charging policies through the PCRF. The PCRF delivers the policies and the charging rules to the PCEF for execution.

According to the foregoing method for service processing, an embodiment of the present invention provides a system and SIP AS GW for service processing.

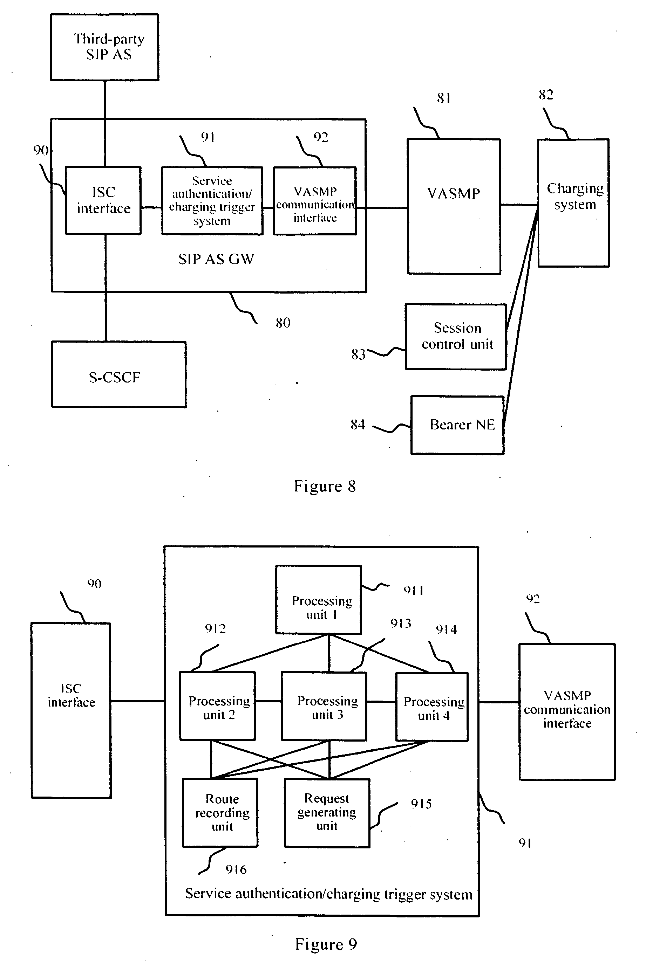

Figure 8 shows the architecture of a system for service processing in an embodiment of the present invention.

As shown in Figure 8, the system for service processing includes: a SIP AS GW 80, and a VAS management platform (VASMP) 81.

The SIP AS GW 80 is adapted to receive a service message from the sender, and judge whether it needs to interact with the VASMP 81 according to the type of the service message; if necessary, request the VASMP 81 to respond after determining that authentication/charging is required, and determine whether to forward the service message to the recipient according to the response from the VASMP 81. That is, if the service message is an interrupt message, for example, the SIP message that originates a service request (for example, INVITE, and MESSAGE), or the SIP message that changes the session media type during a session (for example, RE-INVITE, and UPDATE), the SIP AS GW 80 notifies the VASMP 81 to perform authentication/charging after determining it needs to interact with the VASMP 81 and perform authentication/charging. This type of message interrupts the IMS session, and subsequent IMS session processing is performed according to the authentication/charging result.

The VASMP 81 is adapted to respond to a request received from the SIP AS GW 80, and return the response to the SIP AS GW 80.

Moreover, after determining it needs to interact with the VASMP 81 and further determining that charging is required, the SIP AS GW 80 requests the VASMP 81 to respond, and forwards the service message to the recipient. That is, if the service message is a notification message, for example, the SIP message whose service process is complete (for example, BYE message), the SIP AS GW 81 notifies the VASMP 81 to confirm charging after determining it needs to interact with the VASMP 81 and perform charging. This type of message does not need to interrupt the IMS session.

Moreover, the service message is directly forwarded to the recipient if the SIP AS GW 80 determines it is unnecessary to interact with the VASMP 81. That is, if the service message is a direct-forward message (for example, 200 OK message, and ACK message), the service message is forwarded directly according to the destination address of the SIP message without any additional operation after the SIP AS GW 80 determines it is unnecessary to interact with the VASMP 81.

The system for service processing further includes a charging system 82, a session control NE 83 and a bearer NE 84.

The charging system 82 is adapted to charge. In the embodiment of the present invention, the system for service processing can perform layered charging in the application/content layer, the session/service control layer and the bearer layer respectively. As requested by the SIP AS GW 80, the VASMP 81 interacts with the charging system 82 to perform charging in the application/content layer. The session control NE 83 is adapted to interact with the charging system 82 to perform charging in the session/service control layer. The bearer NE 84 is adapted to interact with the charging system 82 to perform charging in the bearer network. In this way, the operator may adopt different charging policies in each specific charging layer according to different marketing policies, hence supporting flexible charging modes.

Figure 9 shows the architecture of a SIP AS GW in an embodiment of the present invention.

As shown in Figure 9, the SIP AS GW includes an ISC communication interface 90, a service authentication/charging trigger system 91, and a VASMP communication interface 92.

The ISC communication interface 90 is adapted to receive a service message from the sender, and send the service message to the recipient.

The service authentication/charging trigger system 91 is adapted to judge whether it needs to interact with the VASMP 81 according to the type of the service message received by the ISC communication interface 90; if necessary, request the VASMP 81 to respond after determining that authentication/charging is required, and determine whether to forward the service message to the recipient according to the response from the VASMP 81.

The VASMP communication interface 92 is adapted to interact between the service authentication/charging trigger system 91 and the VASMP 81. The VASMP communication interface 92 communicates with the VASMP 81 through a link, and communicates with it through a specific protocol that depends on the specific interface protocol provided by the VASMP 81 of a specific operator.

The service authentication/charging trigger system 91 includes a first processing unit 911, a second processing unit 912, a third processing unit 913 and a fourth processing unit 914.

The first processing unit 911 is adapted to judge whether it needs to interact with the VASMP 81 according to the type of the service message received by the ISC communication interface 90. If the service message is a direct-forward message (for example, 200 OK message, and ACK message), the first processing unit 911 determines it is unnecessary to interact with the VASMP 81; if the service message is an interrupt or notification message, the first processing unit 911 determines it needs to interact with the VASMP 81.

The second processing unit 912 is adapted to request the VASMP 81 to respond after determining it needs to interact with the VASMP 81 and further determining it needs to perform authentication/charging, and determine whether to forward the service message to the recipient according to the response from the VASMP 81. That is, if the service message is an interrupt message, for example, the SIP message that originates a service request (for example, INVITE, and MESSAGE), and the SIP message that changes the session media type during a session (for example, RE-INVITE, and UPDATE), the second processing unit 912 notifies the VASMP 81 to perform authentication/charging after determining it needs to perform authentication/charging.

The third processing unit 913 is adapted to request the VASMP 81 to respond after determining it needs to interact with the VASMP 81 and further determining that charging is required, and forward the service message to the recipient. That is, if the service message is a notification message, for example, the SIP message whose service process is complete (for example, BYE), the third processing unit 913 notifies the VASMP to confirm charging after determining it needs to perform charging.

The fourth processing unit 914 is adapted to directly forward the service message to the recipient after the first processing unit 911 determines it is unnecessary to interact with the VASMP 81.

The service authentication/charging trigger system 91 further includes a request generating unit 915 and a route recording unit 916.

The request generating unit 915 is adapted to generate a request message that requests the VASMP 81 to respond and contains a service ID, a service user ID or a payer ID. The three IDs are results of mapping from the parameters in the service message.

The route recording unit 916 is adapted to add the addresses of the NEs sequentially along the route to the "via" field in the service message in the process of sending the service message from the sender to the recipient; and delete the addresses of the NEs sequentially along the route from the "via" field in the service message returned by the recipient to the sender. The sender is a SIP AS or a SIP UE.

In conclusion, the technical scheme provided in the embodiment of the present invention sets a SIP AS GW, and all service messages between the sender and the recipient need to be authenticated through the SIP AS GW and the VASMP jointly. With the technical scheme, only a third-party SIP AS that passes the authentication is able to access the IMS network, and the security pitfalls and operation risks imposed by the third-party SIP AS on the Internet to the IMS core network of the operator are reduced. Moreover, the SIP AS GW and the VASMP jointly implement charging for the third-party SIP application services, which prevents the third-party SIP AS from generating CDRs directly or originating online charging requests directly and improves credibility and manageability of charging.

Further, the technical scheme in an embodiment of the present invention can authenticate the service request originated by a user and authenticate the service request originated by a third-party SIP AS through interaction between the SIP AS GW and the VASMP, thus making it practicable to manage the value-added applications pushed from a third-party SIP service provider and promoting healthy and orderly development of the VAS chain.

Further, a layered charging model is proposed in an embodiment of the present invention. This model performs charging specific to the application/content layer, the session/service control layer and the bearer network layer. In this way, the operator may adopt different charging policies in each charging layer according to different marketing policies, hence supporting flexible charging modes.

Embodiments within the scope of the present invention also include computer-readable media for carrying or having computer-executable code, computer-executable instructions, computer-readable instructions, or data structures stored thereon. Such computer-readable media may be any available media, which is accessible by a general-purpose or special-purpose computer system. By way of example, and not limitation, such computer-readable media can comprise physical storage media such as RAM, ROM, or other optical disk storage, magnetic disk storage or other magnetic storage devices, or any other media which can be used to carry or store desired program code means in the form of computer-executable instructions, computer-readable instructions, or data structures and which may be accessed by a general-purpose or special-purpose computer system.

Although the embodiment of the present invention has been described through some exemplary embodiments, the embodiment of the present invention is not limited to such embodiments. It is apparent that those skilled in the art can make various modifications and variations to the embodiment of the present invention without departing from the spirit and scope of the embodiment of the present invention. The embodiment of the present invention is intended to cover the modifications and variations provided that they fall in the scope of protection defined by the following claims or their equivalents.

## Claims

1. A method for service processing, comprising:
receiving, by Session Initiation Protocol application server gateway module (80), SIP AS GW, a service message from a sender, wherein the sender may be a third-party SIP AS or a SIP user Equipment;
**characterised by**:
judging whether it needs to interact with a value-added services management platform, VASMP (81), according to the type of the service message; if not , directly forwarding the service message to a recipient; if yes, requesting the VASMP (81) to respond after determining that authentication/charging is required, and determining whether to forward the service message to the recipient according to the response from the VASMP (81); wherein the VASMP (81) communicates with a charging system (82) to implement charging for third-party SIP applications.

2. The method for service processing according to claim 1, **characterized in that**, after judging it needs to interact with the VASMP (81), the SIP AS GW (80) requests the VASMP (81) to respond and forwards the service message to the recipient after determining that charging is required.

3. The method for service processing according to claim 2, **characterized in that**, the SIP AS GW (80) judges it needs to interact with the VASMP (81) and determines that the charging is required when the service message is a notification message, and the SIP AS GW (80) requesting the VASMP (81) to respond comprises:
the SIP AS GW (80) originates a charging confirmation request message;
sends the charging confirmation request message to the VASMP (81) to perform charging; and
receives a charging confirmation response message from the VASMP (81).

4. The method for service processing according to claim 3, **characterized in that**, the charging confirmation request message carries a service ID, a service user ID, or a payer ID, wherein the service ID, the service user ID, and the payer ID are results of mapping from the parameters of the service message.

5. The method for service processing according to claim 1, **characterized in that**, the SIP AS GW (80) judges it needs to interact with the VASMP (81) and determines that the authentication/charging is required when the service message is an interrupt message, and requesting the VASMP (81) to respond comprises:
generating, by the SIP AS GW (80), a service authentication/charging request message; and
sending the service authentication/charging request message to the VASM (81) to perform authentication/charging;
receiving an authentication/charging confirmation response message from the VASMP (81) forwarding the service message to the recipient according to the authentication/charging confirmation response message.

6. The method for service processing according to claim 5, **characterized in that,** the service authentication/charging request message carries a service ID, a service user ID, or a payer ID, wherein the service ID, the service user ID, and the payer ID are results of mapping from the parameters of the service message.

7. The method for service processing according any one of claims 1 to 6, **characterized in that**, the charging comprises at least one of:
an application/content layer charging, wherein the VASMP (81) interacts with the charging system to perform the application/content layer charging;
a session/service layer charging, wherein a session control network element of a network system interacts with the charging system to perform the session/service layer charging; and
a bearer network layer charging, wherein a bearer network element of the network system interacts with the charging system to perform the bearer network layer charging.

8. A Session Initiation Protocol application server gateway module, SIP AS GW, comprising:
an ISC communication interface (90), adapted to receive a service message from a sender, wherein the sender may be a third-party SIP AS or a SIP user Equipment, and send the service message to a recipient;
**characterised by**:
a service authentication/charging trigger system (91), adapted to judge whether it needs to interact with a VASMP (81) according to the type of the service message received by the ISC communication interface (90); if not, directly forwarding the service message to a recipient; if yes, requesting the VASMP to respond after determining that authentication/charging is required, and determining whether to forward the service message to the recipient according to the response from the VASMP (81); and
a VASMP communication interface (92), adapted to interact between the service authentication/charging trigger system (91) and the VASMP (81); wherein the VASMP(81) is adapted to communicate with a charging system (82) to implement charging for third-party SIP applications.

9. The SIP AS GW according to claim 8, **characterized in that**, the service authentication/charging trigger system (91) comprises:
a first processing unit (911), adapted to judge whether it needs to interact with the VASMP (81) according to the type of the service message received by the ISC communication interface (90);
a second processing unit (912), adapted to request the VASMP (81) to respond after determining it needs to interact with the VASMP (81) and further determining it needs to perform authentication/charging, and determine whether to forward the service message to the recipient according to the response from the VASMP (81);
a third processing unit (913), adapted to request the VASMP (81) to respond after determining it needs to interact with the VASMP (81) and further determining that charging is required, and forward the service message to the recipient.

10. The SIP AS GW according to claim 9, **characterized in that**, the service authentication/charging trigger system (91) further comprises:
a fourth processing unit (914), adapted to directly forward the service message to the recipient after the first processing unit (911) determines it is unnecessary to interact with the VASMP (81).

11. The SIP AS GW according to claim 9 or 10, **characterized in that**, the service authentication/charging trigger system (91) further comprises:
a request generating unit (915), adapted to generate a request message that requests the VASMP (81) to respond and contains a service ID, a service user ID or a payer ID, wherein the service ID, the service user ID, and the payer ID are results of mapping from the parameters in the service message.

12. The SIP AS GW according to claim 9 or 10, **characterized in that**, the service authentication/charging trigger system (91) further comprises:
a route recording unit (916), adapted to add the addresses of network elements sequentially along a route to a "via" field in the service message in the process of sending the service message from the sender to the recipient; and delete the addresses of the network elements sequentially along the route from the "via" field in the service message returned by the recipient to the sender.

13. A system for service processing, **characterized in that**, the system comprises:
a Session Initiation Protocol application server gateway module, SIP AS GW, (80) according to any one of claims 8 to 12; and
the VASMP (81), adapted to receive a request message from the SIP AS GW (80), and return a response to the SIP AS GW (80) and communicate with a charging system (82) to implement charging for third-party SIP applications.

14. The system for service processing according to claim 13, **characterized in that**,
the charging system (82), adapted to charge; the VASMP, adapted to interact with the charging system to perform a application/content layer charging according to the request of the SIP AS GW.

15. The system for service processing according to claim 14, **characterized in that**, the system further comprises:
a session control network element (83), adapted to interact with the charging system (82) to perform charging in the session/service control layer; or
a bearer network element (84), adapted to interact with the charging system (82) to perform charging in the bearer network.

16. A computer program product, **characterized in**, comprising computer program code, which, when executed by a computer unit, will cause the computer unit to perform all the processes of claim 1 to 7.

## Patentansprüche

1. Verfahren für die Dienstverarbeitung, das enthält:
Empfangen einer Dienstnachricht von einem Sender, wobei der Sender ein SIP-AS eines Dritten oder eine SIP-Benutzerausrüstung sein kann, durch ein Gateway-Modul (80) eines Anwendungs-Servers mit einem Sitzungseinleitungsprotokoll bzw. Session Initiation Protocol (SIP-AS-GW),
**gekennzeichnet durch**:
Beurteilen gemäß dem Typ der Dienstnachricht, ob es mit einer Mehrwertdienst-Managementplattform VASMP (81) in Wechselwirkung treten muss; falls nicht, direktes Weiterleiten der Dienstnachricht an einen Empfänger; falls ja, Auffordern der VASMP (81), nach der Bestimmung, dass Authentifizierung/Gebührenerfassung erforderlich ist, zu antworten, und Bestimmen gemäß der Antwort von der VASMP (81), ob die Dienstnachricht an den Empfänger weiterzuleiten ist; wobei die VASMP (81) mit einem Gebührenerfassungssystem (82) kommuniziert, um Gebührenerfassung für SIP-Anwendungen Dritter zu implementieren.

2. Verfahren zur Dienstverarbeitung nach Anspruch 1, **dadurch gekennzeichnet, dass** das SIP-AS-GW (80) nach der Beurteilung, dass es mit der VASMP (81) in Wechselwirkung treten muss, die VASMP (81) auffordert, zu antworten, und nach der Bestimmung, dass Gebührenerfassung erforderlich ist, die Dienstnachricht an den Empfänger weiterleitet.

3. Verfahren zur Dienstverarbeitung nach Anspruch 2, **dadurch gekennzeichnet, dass** das SIP-AS-GW (80) beurteilt, dass es mit der VASMP (81) in Wechselwirkung treten muss, und bestimmt, dass die Gebührenerfassung erforderlich ist, wenn die Dienstnachricht eine Benachrichtigungsnachricht ist, und wobei das Auffordern der VASMP (81), zu antworten, durch das SIP-AS-GW (80) enthält:
das SIP-AS-GW (80) erzeugt eine Gebührenerfassungsbestätigungs-Anforderungsnachricht;
sendet die Gebührenerfassungsbestätigungs-Anforderungsnachricht an die VASMP (81), um Gebührenerfassung auszuführen; und
empfängt eine Gebührenerfassungsbestätigungs-Antwortnachricht von der VASMP (81).

4. Verfahren zur Dienstverarbeitung nach Anspruch 3, **dadurch gekennzeichnet, dass** die Gebührenerfassungsbestätigungs-Anforderungsnachricht eine Dienst-ID, eine Dienstbenutzer-ID oder eine Bezahler-ID trägt, wobei die Dienst-ID, die Dienstbenutzer-ID und die Bezahler-ID die Ergebnisse der Umsetzung der Parameter der Dienstnachricht sind.

5. Verfahren zur Dienstverarbeitung nach Anspruch 1, **dadurch gekennzeichnet, dass** das SIP-AS-GW (80) beurteilt, dass es mit der VASMP (81) in Wechselwirkung treten muss, und bestimmt, dass die Authentifizierung/Gebührenerfassung erforderlich ist, wenn die Dienstnachricht eine Unterbrechungsnachricht ist, und wobei das Auffordern der VASMP (81) zu antworten enthält:
Erzeugen einer Dienstauthentifizierungs-/Gebührenerfassungs-Anforderungsnachricht durch das SIP-AS-GW (80); und
Senden der Dienstauthentifizierungs-/Gebührenerfassungs-Anforderungsnachricht an die VASMP (81), um Authentifizierung/Gebührenerfassung auszuführen;
Empfangen einer Authentifizierungs-/Gebührenerfassungsbestätigungs-Antwortnachricht von der VASMP (81), die die Dienstnachricht an den Empfänger gemäß der Authentifizierungs-/Gebührenerfassungsbestätigungs-Antwortnachricht weiterleitet.

6. Verfahren zur Dienstverarbeitung nach Anspruch 5, **dadurch gekennzeichnet, dass** die Dienstauthentifizierungs-/Gebührenerfassungs-Anforderungsnachricht eine Dienst-ID, eine Dienstbenutzer-ID oder eine Bezahler-ID trägt, wobei die Dienst-ID, die Dienstbenutzer-ID und die Bezahler-ID die Ergebnisse der Umsetzung der Parameter der Dienstnachricht sind.

7. Verfahren zur Dienstverarbeitung nach irgendeinem der Ansprüche 1 bis 6, **dadurch gekennzeichnet, dass** die Gebührenerfassung enthält:
eine Gebührenerfassung der Anwendungs-/Inhaltsschicht, wobei ein VASMP (81) mit dem Gebührenerfassungssystem in Wechselwirkung tritt, um die Gebührenerfassung der Anwendungs-/Inhaltsschicht auszuführen; und/oder eine Gebührenerfassung der Sitzungs-/Dienstschicht, wobei ein Sitzungssteuerungs-Netzelement eines Netzsystems mit dem Gebührenerfassungssystem in Wechselwirkung tritt, um die Gebührenerfassung der Sitzungs-/Dienstschicht auszufiihren; und/oder
eine Gebührenerfassung der Trägernetz-Schicht, wobei ein Trägernetz-Element des Netzsystems mit dem Gebührenerfassungssystem in Wechselwirkung tritt, um die Gebührenerfassung der Trägernetz-Schicht auszuführen.

8. Gateway-Modul eines Anwendungs-Servers mit einem Sitzungseinleitungsprotokoll bzw. Session Initiation Protocol, (SIP-AS-GW), das enthält:
eine ISC-Kommunikationsschnittstelle (90), die beschaffen ist, um eine Dienstnachricht von einem Sender, wobei der Sender ein SIP-AS eines Dritten oder eine SIP-Benutzerausrüstung sein kann, zu empfangen und die Dienstnachricht an einen Empfänger zu senden;
**gekennzeichnet durch**
ein Dienstauthentifizierungs-/Gebührenerfassungs-Auslösersystem (91), das beschaffen ist, um gemäß dem Typ der **durch** die ISC-Kommunikationsschnittstelle (90) empfangenen Dienstnachricht zu beurteilen, ob es mit einer VASMP (81) in Wechselwirkung treten muss; falls nicht, direktes Weiterleiten der Dienstnachricht an einen Empfänger; falls ja, Auffordern der VASMP, nach der Bestimmung, dass Authentifizierung/Gebührenerfassung erforderlich ist, zu antworten, und Bestimmen gemäß der Antwort von der VASMP (81), ob die Dienstnachricht an den Empfänger weiterzuleiten ist; und
eine VASMP-Kommunikationsschnittstelle (92), die beschaffen ist, um zwischen dem Dienstauthentifizierungs-/Gebührenerfassungs-Auslösersystem (91) und der VASMP (81) in Wechselwirkung zu treten; wobei die VASMP (81) beschaffen ist, um mit einem Gebührenerfassungssystem (82) zu kommunizieren, um Gebührenerfassung für SIP-Anwendungen Dritter zu implementieren.

9. SIP-AS-GW nach Anspruch 8, **dadurch gekennzeichnet, dass** das Dienstauthentifizierungs-/Gebührenerfassungs-Auslösersystem (91) enthält:
eine erste Verarbeitungseinheit (911), die beschaffen ist, um gemäß dem Typ der durch die ISC-Kommunikationsschnittstelle (90) empfangenen Dienstnachricht zu beurteilen, ob sie mit der VASMP (81) in Wechselwirkung treten muss;
eine zweite Verarbeitungseinheit (912), die beschaffen ist, um nach der Bestimmung, dass sie mit der VASMP (81) in Wechselwirkung treten muss, und ferner der Bestimmung, dass sie Authentifizierung/Gebührenerfassung ausführen muss, die VASMP (81) aufzufordern, zu antworten, und um gemäß der Antwort von der VASMP (81) zu bestimmen, ob die Dienstnachricht an den Empfänger weiterzuleiten ist;
eine dritte Verarbeitungseinheit (913), die beschaffen ist, um nach der Bestimmung, dass sie mit der VASMP (81) in Wechselwirkung treten muss, und ferner der Bestimmung, dass Gebührenerfassung erforderlich ist, die VASMP (81) aufzufordern, zu antworten, und um die Dienstnachricht an den Empfänger weiterzuleiten.

10. SIP-AS-GW nach Anspruch 9, **dadurch gekennzeichnet, dass** das Dienstauthentifizierungs-/Gebührenerfassungs-Auslösersystem (91) ferner enthält:
eine vierte Verarbeitungseinheit (914), die beschaffen ist, um die Dienstnachricht direkt an den Empfänger weiterzuleiten, nachdem die erste Verarbeitungseinheit (911) bestimmt, dass es unnötig ist, mit der VASMP (81) in Wechselwirkung zu treten.

11. SIP-AS-GW nach Anspruch 9 oder 10, **dadurch gekennzeichnet, dass** das Dienstauthentifizierungs-/Gebührenerfassungs-Auslösersystem (91) ferner enthält:
eine Anforderungserzeugungseinheit (915), die beschaffen ist, um eine Anforderungsnachricht zu erzeugen, die die VASMP (81) auffordert, zu antworten, und eine Dienst-ID, eine Dienstbenutzer-ID oder eine Bezahler-ID enthält, wobei die Dienst-ID, die Dienstbenutzer-ID und die Bezahler-ID die Ergebnisse der Umsetzung der Parameter in der Dienstnachricht sind.

12. SIP-AS-GW nach Anspruch 9 oder 10, **dadurch gekennzeichnet, dass** das Dienstauthentifizierungs-/Gebührenerfassungs-Auslösersystem (91) ferner enthält:
eine Wegaufzeichnungseinheit (916), die beschaffen ist, um beim Prozess des Sendens der Dienstnachricht vom Sender an den Empfänger die Adressen der Netzelemente sequentiell längs eines Weges zu einem "über"-Feld in der Dienstnachricht hinzuzufügen; und um in der vom Empfänger an den Sender zurückgeschickten Dienstnachricht die Adressen der Netzelemente sequentiell längs des Weges aus dem "über"-Feld zu löschen.

13. System zur Dienstverarbeitung, **dadurch gekennzeichnet, dass** das System enthält:
ein Gateway-Modul eines Anwendungs-Servers mit einem Sitzungseinleitungsprotokoll bzw. Session Initiation Protocol, (SIP-AS-GW), (80) nach irgendeinem der Ansprüche 8 bis 12; und
die VASMP (81), die beschaffen ist, um eine Anforderungsnachricht vom SIP-AS-GW (80) zu empfangen und um eine Antwort an das SIP-AS-GW (80) zurückzuschicken und um mit einem Gebührenerfassungssystem (82) zu kommunizieren, um Gebührenerfassung für SIP-Anwendungen Dritter zu implementieren.

14. System zur Dienstverarbeitung nach Anspruch 13, **dadurch gekennzeichnet, dass**:
das Gebührenerfassungssystem (82) beschaffen ist, um Gebühren zu erfassen; die VASMP beschaffen ist, um mit dem Gebührenerfassungssystem in Wechselwirkung zu treten, um eine Gebührenerfassung der Anwendungs-/Inhaltsschicht gemäß der Anforderung des SIP-AS-GW auszuführen.

15. System zur Dienstverarbeitung nach Anspruch 14, **dadurch gekennzeichnet, dass** das System ferner enthält:
ein Sitzungssteuerungs-Netzelement (83), das beschaffen ist, um mit dem Gebührenerfassungssystem (82) in Wechselwirkung zu treten, um Gebührenerfassung in der Sitzungs-/Dienststeuerungsschicht auszuführen; oder
ein Trägernetz-Element (84), das beschaffen ist, um mit dem Gebührenerfassungssystem (82) in Wechselwirkung zu treten, um Gebührenerfassung im Trägernetz auszuführen.

16. Computer-Programmprodukt, **dadurch gekennzeichnet, dass** es Computer-Programmcode enthält, der, wenn er durch eine Computer-Einheit ausgeführt wird, die Computer-Einheit veranlasst, alle Prozesse der Ansprüche 1 bis 7 auszuführen.

## Revendications

1. Procédé pour le traitement de services, comprenant :
la réception, par un module passerelle formant serveur d'application de Protocole d'Ouverture de Session (80), ou SIP AS GW, d'un message de service provenant d'un émetteur, l'émetteur pouvant être un serveur SIP AS tiers ou un équipement utilisateur SIP ;
**caractérisé par** :
le fait de juger s'il est nécessaire d'interagir avec une plateforme de gestion de services à valeur ajoutée, VASMP (81), en fonction du type du message de service ;
dans la négative, la réexpédition directe du message de service à un destinataire ;
dans l'affirmative, le fait de demander à la plateforme VASMP (81) de répondre après avoir déterminé qu'une authentification/facturation était exigée, et le fait de déterminer s'il est nécessaire de réexpédier le message de service au destinataire en fonction de la réponse provenant de la plateforme VASMP (81) ; la plateforme VASMP (81) communiquant avec un système de facturation (82) pour mettre en oeuvre une facturation pour des applications SIP tierces.

2. Procédé pour le traitement de services selon la revendication 1, **caractérisé en ce que**, après avoir jugé qu'il lui était nécessaire d'interagir avec la plateforme VASMP (81), le module SIP AS GW (80) demande à la plateforme VASMP (81) de répondre et réexpédie le message de service au destinataire après avoir déterminé qu'une facturation était exigée.

3. Procédé pour le traitement de services selon la revendication 2, **caractérisé en ce que** le module SIP AS GW (80) juge qu'il est nécessaire d'interagir avec la plateforme VASMP (81) et détermine que la facturation est exigée lorsque le message de service est un message de notification, et **en ce que** la demande de réponse faite par le module SIP AS GW (80) à la plateforme VASMP (81) consiste **en ce que** :
le module SIP AS GW (80) émet un message de demande de confirmation de facturation ;
envoie le message de demande de confirmation de facturation à la plateforme VASMP (81) pour qu'elle effectue la facturation ; et
reçoit un message de réponse de confirmation de facturation en provenance de la plateforme VASMP (81).

4. Procédé pour le traitement de services selon la revendication 3, **caractérisé en ce que** le message de demande de confirmation de facturation transporte un ID du service, un ID d'utilisateur du service, un ID du payeur, dans lequel l'ID du service, l'ID d'utilisateur du service et l'ID du payeur sont des résultats de mise en correspondance des paramètres du message de service.

5. Procédé pour le traitement de services selon la revendication 1, **caractérisé en ce que** le module SIP AS GW (80) juge qu'il lui est nécessaire d'interagir avec la plateforme VASMP (81) et détermine que l'authentification/la facturation est exigée lorsque le message de service est un message d'interruption, et **en ce que** la demande de réponse de la plateforme VASMP (81) comprend :
la production, par le module SIP AS GW (80), d'un message de demande d'authentification/de facturation du service ; et
l'envoi du message de demande d'authentification/de facturation du service à la plateforme VASMP (81) pour qu'elle effectue l'authentification/la facturation ;
la réception d'un message de réponse confirmant l'authentification/la facturation en provenance de la plateforme (81) qui réexpédie le message de service au destinataire en fonction du message de réponse confirmant l'authentification/la facturation.

6. Procédé pour le traitement de services selon la revendication 5, **caractérisé en ce que** le message de demande d'authentification/de facturation du service transporte un ID du service, un ID d'utilisateur du service, ou un ID du payeur, dans lequel l'ID du service, l'ID d'utilisateur du service et l'ID du payeur sont les résultats d'une mise en correspondance des paramètres du message de service.

7. Procédé pour le traitement de services selon l'une quelconque des revendications 1 à 6, **caractérisé en ce que** la facturation comprend au moins une étape parmi :
une facturation de la couche d'application/de contenu, la plateforme VASMP (81) interagissant avec le système de facturation pour effectuer une facturation de la couche d'application/de contenu ;
une facturation de la couche de session/service, un élément de réseau de commande de session d'un système de réseau interagissant avec le système de facturation pour effectuer la facturation de la couche de session/service ; et
une tarification de la couche de réseau de support, un élément du réseau de support du système de réseau interagissant avec le système de facturation pour effectuer la facturation de la couche de réseau de support.

8. Module passerelle formant serveur d'application de Protocole d'Ouverture de Session, ou SIP AS GW, comprenant :
une interface de communication ISC (90), apte à recevoir un message de service d'un émetteur, l'émetteur pouvant être un serveur SIP AS tiers ou un équipement utilisateur SIP ; et à envoyer le message de service à un destinataire ;
**caractérisé par** :
un système de déclenchement d'authentification/de facturation du service (91), apte à juger s'il lui est nécessaire d'interagir avec une plateforme VASMP (81) en fonction du type du message de service reçu par l'interface de communication ISC (90) ; dans la négative, à réexpédier directement le message de service à un destinataire ; dans l'affirmative, à demander à la plateforme VASMP de répondre après avoir déterminé qu'une authentification/facturation était exigée, et à déterminer s'il est nécessaire de réexpédier le message de service au destinataire en fonction de la réponse provenant de la plateforme VASMP (81) ; et
une interface de communication VASMP (92), apte à interagir entre le système de déclenchement d'authentification/de facturation du service (91) et la plateforme VASMP (81) ; la plateforme VASMP (81) étant apte à communiquer avec un système de facturation (82) pour mettre en oeuvre une facturation pour des applications SIP tierces.

9. Module SIP AS GW selon la revendication 8, **caractérisé en ce que** le système de déclenchement d'authentification/de facturation du service (91) comprend :
une première unité de traitement (911) apte à juger s'il est nécessaire d'interagir avec la plateforme VASMP (81) en fonction du type du message de service reçu par l'interface de communication ISC (90) ;
une deuxième unité de traitement (912) apte à demander à la plateforme VASMP (81) de répondre après avoir déterminé qu'il lui était nécessaire d'interagir avec la plateforme VASMP (81) et à déterminer en outre qu'il lui est nécessaire d'effectuer une authentification/facturation, et à déterminer s'il est nécessaire de réexpédier le message de service au destinataire en fonction de la réponse provenant de la plateforme VASMP (81) ;
une troisième unité de traitement (913) apte à demander à la plateforme VASMP (81) de répondre après avoir déterminé qu'il était nécessaire d'interagir avec la plateforme VASMP (81) et à déterminer en outre qu'une facturation est nécessaire, et à réexpédier le message de service au destinataire.

10. Module SIP AS GW selon la revendication 9, **caractérisé en ce que** le système de déclenchement d'authentification/de facturation du service (91) comprend en outre :
une quatrième unité de traitement (914), apte à réexpédier directement le message de service au destinataire après que la première unité de traitement (911) a déterminé qu'il était inutile d'interagir avec la plateforme VASMP (81).

11. Module SIP AS GW selon la revendication 9 ou 10, **caractérisé en ce que** le système de déclenchement d'authentification/de facturation du service (91) comprend en outre :
une unité génératrice de demande (915), apte à générer un message de demande qui demande à la plateforme VASMP (81) de répondre et qui contient un ID de service,
un ID d'utilisateur du service, ou un ID du payeur, l'ID du service, l'ID d'utilisateur du service et l'ID du payeur étant des résultats d'une mise en correspondance des paramètres contenus dans le message de service.

12. Module SIP AS GW selon la revendication 9 ou 10, **caractérisé en ce que** le système de déclenchement d'authentification/de facturation du service (91) comprend en outre :
une unité d'enregistrement de trajet d'acheminement (916), apte à ajouter séquentiellement les adresses d'éléments de réseau suivant un trajet d'acheminement à un champ "via" contenu dans le message de service lors du traitement d'envoi du message de service de l'émetteur au destinataire ; et à effacer séquentiellement les adresses des éléments de réseau suivant le trajet d'acheminement du champ "via" contenu dans le message de service renvoyé par le destinataire à l'émetteur.

13. Système pour le traitement de services, **caractérisé en ce que** le système comprend :
un module passerelle formant serveur d'application de Protocole d'Ouverture de Session, ou SIP AS GW, (80), selon l'une quelconque des revendications 8 à 12 ; et
la plateforme VASMP (81), qui est apte à recevoir un message de demande du module SIP AS GW (80), à renvoyer une réponse au module SIP AS GW (80) et à communiquer avec un système de facturation (82) pour mettre en oeuvre une facturation pour des applications SIP tierces.

14. Système pour le traitement de services selon la revendication 13, **caractérisé en ce que** :
le système de facturation (82) est apte à facturer ; la plateforme VASMP est apte à interagir avec le système de facturation pour effectuer une facturation de la couche d'application/de contenu conformément à la demande du module SIP AS GW.

15. Système pour le traitement de services selon la revendication 14, **caractérisé en ce** le système comprend en outre :
un élément de réseau de contrôle de session (83) apte à interagir avec le système de facturation (82) pour effectuer une facturation dans la couche de contrôle de session/service ; ou
un élément de réseau de support (84), apte à interagir avec le système de facturation (82) pour effectuer une tarification au niveau du réseau de support.

16. Produit à base de programme informatique, **caractérisé en ce qu'**il comprend un code de programme pour ordinateur qui, lorsqu'il est exécuté par une unité informatique, fait en sorte que l'unité informatique exécute tous les processus des revendications 1 à 7.
